# EUROPEAN PATENT APPLICATION

(11) **EP 3 287 699 A1**
(43) Date of publication of application: **28.02.2018**
(21) Application number: 16782896.1
(22) Date of filing: 14.03.2016
(51) Int. Cl.: F23Q 7/00

(54) **GLOW PLUG**

(30) Priority: 21.04.2015 JP 2015087147
(71) Applicant: Bosch Corporation, Tokyo 150-8360 (JP)
(72) Inventor: TOYOSHIMA Yasuo, Higashimatsuyama-shi Saitama 355-8603 (JP)
(74) Representative: Bee, Joachim
(86) International application number: PCT/JP2016/058023
(87) International publication number: WO 2016/170874

(57) **Abstract**

Breakage in a short period is suppressed by improving a heat dissipation property.

A glow plug (1) that includes: a heater (11), a tip of which is inserted in a combustion chamber of an internal combustion engine; a cylindrical body (12) that supports a base end of the heater; a housing (14) that supports the cylindrical body in a state where a heating section of the heater is projected; and a pressure sensor (15) that is provided in the housing and detects a pressure in a combustion chamber includes: a pressure introduction chamber (142) that is formed between the pressure sensor and the cylindrical body in the housing; and a communication path (21) that is formed in at least one of the housing and the cylindrical body and communicates between the combustion chamber and the pressure introduction chamber.

## Description

### Technical Field

The invention relates to a glow plug that is used to assist a start-up of an internal combustion engine such as a diesel engine and includes a pressure sensor detecting a pressure in a combustion chamber.

### Background Art

A glow plug that is used to assist a start-up of an internal combustion engine such as a diesel engine and that includes a pressure sensor detecting a combustion pressure in a combustion chamber of the internal combustion engine has been in practical use (for example, see PTL 1).

In the glow plug described in PTL 1, a heater element, which is heated by energization, is connected to a housing by a metal diaphragm or the like and is accommodated in a displaceable manner in the housing. The heater element is displaced in an axial direction of the housing by a pressure change in the combustion chamber, and said displacement is transmitted to the pressure sensor and is detected as the combustion pressure in the combustion chamber of the internal combustion engine.

### Citation List

### Patent Literature

[PTL 1] JP-T-2008-525758

### Disclosure of Invention

### Technical Problem

However, in the glow plug that includes the pressure sensor as described above, the heater element and the housing are connected only by the diaphragm, and heat transferred from the heater element is mainly transferred to the housing side through a path via the thin diaphragm. Accordingly, compared to a general glow plug in which the heater element is fixed to the housing by a brazing material, transfer efficiency of the heat that is transferred from the heater element to the housing is low, and a heat dissipation property is low. Thus, temperatures of the heater element and an inside of the housing tend to be increased. As a result, temperatures of an extraction electrode of a heat generation body in the heater element and the brazing material each exceed a limit temperature, which results in a crack in the heater element, and the like. Thus, the glow plug is possibly broken in a short period.

The invention has been made in view of the above problem and therefore has a purpose of providing a glow plug that can improve a heat dissipation property and can thereby suppress breakage thereof in a short period.

### Solution to Problem

In order to solve the above problem, the invention is a glow plug that includes: a heater, a tip of which is inserted in a combustion chamber of an internal combustion engine; a cylindrical body that supports a base end of the heater; a housing that supports the cylindrical body in a state where a heating section of the heater is projected; and a pressure sensor that is provided in the housing and detects a pressure in the combustion chamber and that is characterized by including: a pressure introduction chamber that is formed between the pressure sensor and the cylindrical body in the housing; and a communication path that is formed in at least one of the housing and the cylindrical body and communicates between the combustion chamber and the pressure introduction chamber.

The communication path is preferably a through-hole that is formed in at least one of the housing and the cylindrical body.

The communication path is preferably a groove that is formed in at least one of an inner peripheral surface of the housing and an outer peripheral surface of the cylindrical body.

The grooves that are formed in the inner peripheral surface of the housing and the outer peripheral surface of the cylindrical body preferably oppose each other to form a through-hole.

A plurality of the communication paths is preferably formed.

On an outside of the pressure introduction chamber, cable that is connected to the heater and energizes said heater is preferably wired to an outside of the housing. Advantageous Effects of Invention

According to the invention, breakage in a short period can be suppressed by improving a heat dissipation property.

### Brief Description of Drawings

Fig. 1 is a vertical cross-sectional view of a glow plug according to an embodiment of the invention.
Fig. 2 is a vertical cross-sectional view in which a portion near a tip of a housing of the glow plug according to the embodiment of the invention is enlarged.
Fig. 3 includes views that depict a manufacturing method of the glow plug according to the embodiment of the invention.
Fig. 4 includes vertical cross-sectional views in each of which a portion near a tip of a housing for a glow plug according to another embodiment of the invention is enlarged. Description of Embodiments

A description will be made on a preferred embodiment of the invention with reference to the drawings. Note that the embodiment, which will be described below, is merely one example and various embodiments can be implemented within the scope of the invention.

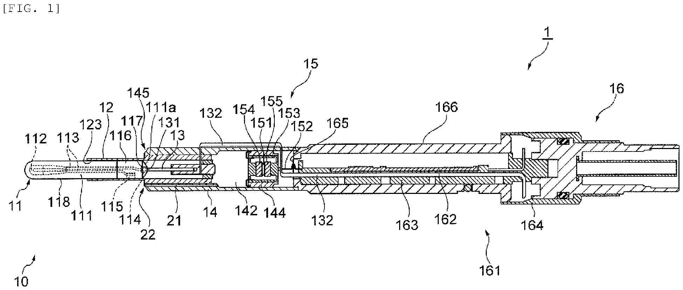

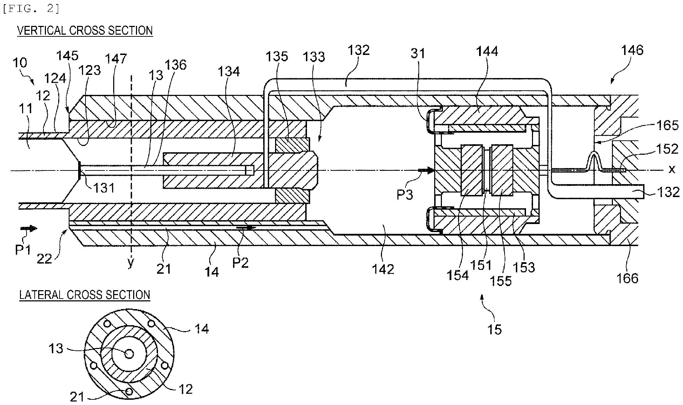

Fig. 1 is a vertical cross-sectional view of a glow plug. Fig. 2 is a vertical cross-sectional view of the glow plug in which a portion near a tip of a housing is enlarged in Fig. 1. Hereinafter, a lateral cross section means a cross section that is perpendicular to a longitudinal axis of a glow plug 1, and a vertical cross section means a cross section that includes the longitudinal axis of the glow plug 1.

As depicted in Fig. 1 and Fig. 2, the glow plug 1 includes a heater element 10, a housing 14, a pressure sensor module 15, an electronic module 16, and the like.

### (Heater Element)

The heater element 10 assists a start-up of an internal combustion engine, is inserted in a combustion chamber (a precombustion chamber in a case of the internal combustion engine of a precombustion type, the combustion chamber of the internal combustion engine in a case of the internal combustion engine of a direct-injection type), and is fixed. The heater element 10 is constructed of ceramics, for example. Note that the heater element 10 is not limited to the ceramics but may be constructed of metal.

As depicted in Fig. 1 and Fig. 2, the heater element 10 includes a ceramic heater 11, a metallic outer cylinder (cylindrical body) 12, a lead section 13, and the like.

The ceramic heater 11 is a portion that is heated by energization, and a ceramic heat generation body 112 formed in a U-shape is embedded in a ceramic insulating base 111 that constitutes a body of the ceramic heater 11 therein. Apositive electrode 114 and a negative electrode 115 are respectively provided on both end sides of this ceramic heat generation body 112 via metal leads 113. The negative electrode 115 is taken out on an outer peripheral surface of the ceramic insulating base 111, and a negative-electrode side metallized section 116 is formed on the outer peripheral surface of the ceramic insulating base 111 that includes the negative electrode 115.

Of the ceramic heater 11, at least the negative-electrode side metallized section 116 is joined to an inner surface on one end side of the outer cylinder 12, and the negative electrode 115 is electrically connected to the outer cylinder 12. The outer cylinder 12 is formed of a metallic material with electrical conductivity and thermal conductivity. The outer cylinder 12 is formed to have an inner diameter in such extent that the ceramic heater 11 can be inserted therein and is formed in such extent that a slight clearance is formed between an inner peripheral surface 123 of the outer cylinder 12 and an outer peripheral surface 118 of the ceramic heater 11 when the ceramic heater 11 is inserted in the outer cylinder 12.

The ceramic heater 11 and the outer cylinder 12 are joined by brazing or the like in a state where the negative-electrode side metallized section 116 of the ceramic heater 11 is inserted in and fixed to an inside of the outer cylinder 12. That is, the negative-electrode side metallized section 116 of the ceramic heater 11 is joined to the inner surface of the outer cylinder 12 by the brazing material and is thereby electrically connected thereto. The negative-electrode side metallized section 116 is formed of silver paste that contains 30 wt% or less of copper (Cu) and 10 wt% or less of titanium (Ti) with respect to total weight of the negative-electrode side metallized section 116, for example.

The positive electrode 114 is taken out on an outer surface of the ceramic insulating base 111 on a base end side that is opposite from a tip side where the ceramic heat generation body 112 is embedded. A positive-electrode side metallized section 117 is formed on a rear end surface of the ceramic insulating base 111, which includes the positive electrode 114. This positive-electrode side metallized section 117 is joined to a tip surface 131 of the lead section 13 by brazing or the like, and the positive electrode 114 and the lead section 13 are electrically connected.

A chamfered section 111a is formed on the rear end surface of the ceramic insulating base 111. In this way, a distance can be secured between the ceramic insulating base 111 and the outer cylinder 12 around a joined section between the ceramic insulating base 111 and the lead section 13. Accordingly, in the case of brazing, an insulation property between the brazing material and the outer cylinder 12 is improved, and a chance of occurrence of dielectric breakdown can be reduced.

The lead section 13 is electrically connected to the positive electrode 114 of the ceramic heater 11. A large current (for example, 4 to 30 amperes) at a high temperature flows through the lead section 13 during actuation of the glow plug 1. Accordingly, when a diameter of the lead section 13 is too small as being smaller than 1 mm, for example, in addition to self-heating, the lead section 13 is possibly oxidized in a short time. For this reason, the lead section 13 is formed as a lead rod with a relatively large diameter having a cross-sectional area that is 20% or more of a cross-sectional area of the ceramic insulating base 111, for example.

Meanwhile, when the diameter of the lead section 13 is too large, a distance between the lead section 13 and the outer cylinder 12 cannot sufficiently be secured, which possibly results in the dielectric breakdown. Accordingly, the cross-sectional area of the lead section 13 is preferably 40% or less of the cross-sectional area of the ceramic insulating base 111, for example. In addition, length of the lead section 13 is preferably at least twice as long as the diameter of the lead section 13.

The lead section 13 is formed of a material with high electrical conductivity. As such a material, for example, copper (Cu), aluminum (Al), or alloys of those can be exemplified. Alternatively, iron alloy or cast iron with low rigidity and the high electrical conductivity may be used.

Note that nickel (Ni) plating or the like may be applied to the lead section 13 to improve thermal resistance or the lead section 13 may be covered with silver (Ag) to improve oxidation resistance.

The lead section 13 is guided to the pressure sensor module 15 side, and, at the rear end 133 on the pressure sensor module 15, is retained in the outer cylinder 12 by a retaining member 134 and a positioning member 135. In this way, the rear end 133 of the lead section 13 is positioned such that a certain distance is kept between the lead section 13 and the inner peripheral surface 123 of the outer cylinder 12. Here, the positioning member 135 is installed in a manner to contact the inner peripheral surface 123 of the outer cylinder 12, and retains the lead section 13 via the retaining member 134. The retaining member 134 is formed on the rear end 133 side in a manner to cover an outer peripheral surface 136 of the lead section 13. The retaining member 134 is electrically connected to the lead section 13. The lead section 13 is electrically connected to lead cable 132 serving as an external connection terminal via the retaining member 134 and is pulled out of the housing 14 of the glow plug 1 by the lead cable 132. In order to prevent exposure to an inside of a pressure introduction chamber 142, the lead cable 132 once penetrates the outer cylinder 12 and the housing 14 on an outer side of the pressure introduction chamber 142, that is, on the rear end 133 side of the lead section 13, which is surrounded by the outer cylinder 12, and is pulled out of an outer peripheral surface of the housing 14. The lead cable 132 penetrates the outer cylinder 12 and the housing 14 in a portion that is not formed with a communication path 21, which will be described below. That is, in the outer cylinder 12 and the housing 14, the lead cable 132 is installed in a manner not to overlap the communication path 21. The lead cable 132, which is pulled out on the outer peripheral surface of the housing 14, is installed at a rear end of the pressure sensor module 15 in a manner to be guided to an inner peripheral surface of the housing 14. In this way, a current can be supplied to the ceramic heater 11 from the lead cable 132.

### (Housing)

As depicted in Fig. 1 and Fig. 2, the housing 14 is an attachment jig to a cylinder head of the engine, which is not depicted, and accommodates the heater element 10, the pressure sensor module 15, and the like. The housing 14 is formed of a metallic material with the thermal conductivity and superior heat dissipation property. The housing 14 is formed in a cylindrical shape, for example, and the heater element 10 is fixed to the inside of the housing 14 by press-fitting in states where the base end side of the heater element 10 is partially arranged in the housing 14 and a tip side thereof is projected to the outside of the housing 14 from a tip 145 of the housing 14. Note that the heater element 10 may be fixed to the inner peripheral surface of the housing 14 by brazing. The tip of the heater element 10, which is projected from the housing 14, is inserted in the combustion chamber of the internal combustion engine.

In the housing 14, the base end side of the heater element 10 is partially arranged on the tip 145 side of the housing 14, and the pressure sensor module 15 is arranged on a rear end 146 side of the housing 14 with the pressure introduction chamber 142 being interposed therebetween. The pressure introduction chamber 142 is a space provided between the heater element 10 and the pressure sensor module 15 in the housing 14. The housing 14 is formed with the communication path 21 that communicates with the pressure introduction chamber 142 while extending in the axial direction over the tip 145 of said housing 14. Because the tip 145 of the housing 14 is inserted in the combustion chamber of the internal combustion engine, a pressure in the combustion chamber is transferred to the pressure introduction chamber 142 via the communication path 21. Thus, a pressure in the pressure introduction chamber 142 becomes equal to the pressure in the combustion chamber. In this way, it is configured that the pressure in the pressure introduction chamber 142, which faces the pressure sensor module 15, can directly be detected as the pressure in the combustion chamber by the pressure sensor module 15.

The communication path 21 is formed as a through-hole that penetrates the housing 14 along the axial direction thereof, and a plurality (for example, 5) of the communication paths 21 is formed at equally-spaced intervals along a peripheral direction of the housing 14 that has the cylindrical shape in a lateral cross-sectional view. Note that the number of the formed communication path 21 is set to the appropriate number in consideration of strength of the housing 14. By forming the plural communication paths 21, the pressure in the pressure introduction chamber 142 can promptly become equal to the pressure in the combustion chamber of the internal combustion engine.

### (Pressure Sensor Module)

The pressure sensor module 15 is provided on the rear end 146 side of the housing 14. The pressure sensor module 15 includes a pressure sensor 151, sensor cable 152, and a sensor housing 153. The pressure sensor 151 can be configured as a piezoelectric sensor element, for example. This piezoelectric sensor element generates electric charge when receiving a mechanical load, and this electric charge can be detected in contact regions 154, 155 of the pressure sensor 151. The detected electric charge is led out of the housing 14 of the glow plug 1 by the sensor cable 152. The sensor housing 153 accommodates the pressure sensor 151 and the contact regions 154, 155 and is supported in a sleeve 144. On the rear end 146 side of the housing 14 that is a far side from the ceramic heater 11, the pressure sensor module 15 is supported by the sleeve 144 that is included in the housing 14. Note that a boundary between the sleeve 144 and the pressure introduction chamber 142 is sealed by a diaphragm 31 formed of precipitation-hardening stainless steel such as SUS 631.

For example, in the example of Fig. 2, when the pressure in the combustion chamber of the internal combustion engine is higher than the pressure in the pressure introduction chamber 142, the pressure is applied to an opening 22 of the housing 14 (an arrow P1), the pressure is transferred from the communication path 21 to the pressure introduction chamber 142 by this pressure (an arrow P2), and the pressure in the pressure introduction chamber 142 is increased until it becomes substantially equal to the pressure in the combustion chamber of the internal combustion engine.

This pressure of the pressure introduction chamber 142 is transferred as a pressure P3 to the pressure sensor 151. In accordance with the transferred pressure, this pressure sensor 151 outputs a detection signal via the sensor cable 152, and the pressure in the combustion chamber of the internal combustion engine is measured using this detection signal.

### (Electronic Module)

The electronic module 16 has a contact unit 161, and the contact unit 161 includes: a support body 163 that accommodates a signal processing unit 162; and a connector housing 164. On an end surface side 165 of the support body 163 on the pressure sensor module 15 side, the contact unit 161 has an interface for contact connection with the heater element 10 and the pressure sensor module 15. The interface is implemented via the sensor cable 152 and the lead cable 132 that are pulled out of the housing 14 of the glow plug 1. Note that the contact unit 161 is at least partially surrounded by a tubular electronic module housing 166 and, in this case, the support body 163 is completely surrounded by the electronic module housing 166. In addition, the electronic module housing 166 is partially surrounded by the connector housing 164.

### <Manufacturing Method of Glow Plug>

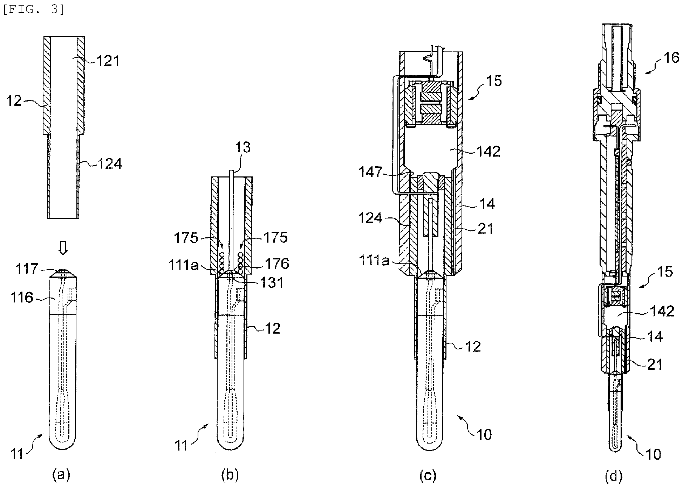

A description will be made on a manufacturing method of the glow plug 1 on the basis of Fig. 3.

As depicted in Fig. 3(a), the ceramic heater 11 is inserted in an inner hole 121 of the outer cylinder 12. The ceramic heater 11 is inserted in the outer cylinder 12 until reaching a position where a specified positional relationship (see Fig. 3(b)) in which the positive-electrode side metallized section 117 of the ceramic heater 11 is sufficiently covered with the outer cylinder 12 is established.

Next, as depicted in Fig. 3(b), brazing materials 175 are placed on the chamfered section 111a of the ceramic heater 11. In addition, the tip surface 131 of the lead section 13 is placed on the positive-electrode side metallized section 117 of the ceramic heater 11. At this time, another brazing material 176, which differs from the brazing materials 175 placed on the chamfered section 111a, is placed between the positive-electrode side metallized section 117 and the lead section 13.

Next, in a state where the outer cylinder 12, the ceramic heater 11, and the lead section 13 are temporarily assembled, this heater element 10 is heated to 800 to 900 °C. In this way, the ceramic heater 11 and the outer cylinder 12 as well as the ceramic heater 11 and the lead section 13 are simultaneously brazed.

Next, as depicted in Fig. 3(c), the housing 14, in which the pressure sensor module 15 is installed, is press-fitted from a rear end side of the heater element 10 to a specified position, and then the housing 14 and the outer cylinder 12 are fixed. Note that the housing 14 and the outer cylinder 12 may be fixed by brazing an inner peripheral surface 147 of the housing 14 and an outer peripheral surface 124 of the outer cylinder 12 by a brazing material.

Note that the communication path 21 is formed in the housing 14 in advance. A forming method of the communication path 21 can appropriately be selected in comprehensive consideration of a target material used to form the communication path 21 as well as a shape, size, length, and the like of the communication path 21. For example, mechanical processing by a drill, a laser cutter, or the like and chemical processing such as etching processing can be exemplified.

Lastly, as depicted in Fig. 3(d), the electronic module 16 that is assembled in advance is connected from a rear end of the housing 14, and the glow plug 1 is thereby assembled.

### <Effects of Embodiment>

According to the above-described configuration, because the glow plug 1 has the communication path 21 that communicates between the combustion chamber of the internal combustion engine and the pressure introduction chamber 142 of the housing 14, the pressure in the combustion chamber of the internal combustion engine can directly be detected from a pressure change in the pressure introduction chamber 142. In the glow plug 1 with such a configuration, because the heater element 10 does not have to be attached in a displaceable state with respect to the housing 14, the heater element 10 can directly be fixed to the housing 14. In this way, a contact area between the heater element 10 and the housing 14 can be increased, the heat transferred from the heater element 10 can efficiently be transferred to the housing 14. Thus, the heat dissipation property is improved, and breakage in a short period is suppressed. In addition, a diaphragm used to displace the heater element 10 is no longer necessary.

In the glow plug 1, the communication path 21 is formed as the through-hole that is formed in at least one of the housing 14 and the outer cylinder 12. In this way, the contact area between the heater element 10 and the housing 14 can be increased. For example, in the case where the communication path 21 is a groove that is formed in the inner peripheral surface 147 of the housing 14 or the outer peripheral surface 124 of the outer cylinder 12, the communication path 21 is provided in a joined section between the heater element 10 and the housing 14. Accordingly, it is configured that the outer peripheral surface 124 of the outer cylinder 12 does not partially contact the inner peripheral surface 147 of the housing 14. However, in the case where the communication path 21 is the through-hole that is formed in at least one of the housing 14 and the outer cylinder 12, the communication path 21 is not provided in the joined section between the heater element 10 and the housing 14. Thus, the joined section between the heater element 10 and the housing 14 is configured that the entire outer peripheral surface 124 of the outer cylinder 12 and the entire inner peripheral surface 147 of the housing 14 contact each other. Thus, the heat dissipation property from the heater element 10 can further be improved.

In the glow plug 1, when the communication path 21 is formed as the groove that is formed in at least one of the inner peripheral surface 147 of the housing 14 and the outer peripheral surface 124 of the outer cylinder 12, the communication path 21 can easily be formed. For example, in the case where the communication path 21 is the through-hole that is formed in at least one of the housing 14 and the outer cylinder 12, it is difficult to check an inside of a portion during processing due to processing of the insides of the housing 14 and the outer cylinder 12. However, in the case where the communication path 21 is the groove that is formed in the inner peripheral surface 147 of the housing 14 or the outer peripheral surface 124 of the outer cylinder 12, the groove can be processed from a surface side of the housing 14 or the outer cylinder 12. Thus, the groove can be processed while the portion during processing is checked.

### <Modified Example>

The glow plug that has been described so far only illustrates one aspect of the invention and thus do not limit the invention. Each embodiment can arbitrarily be changed within the scope of the invention.

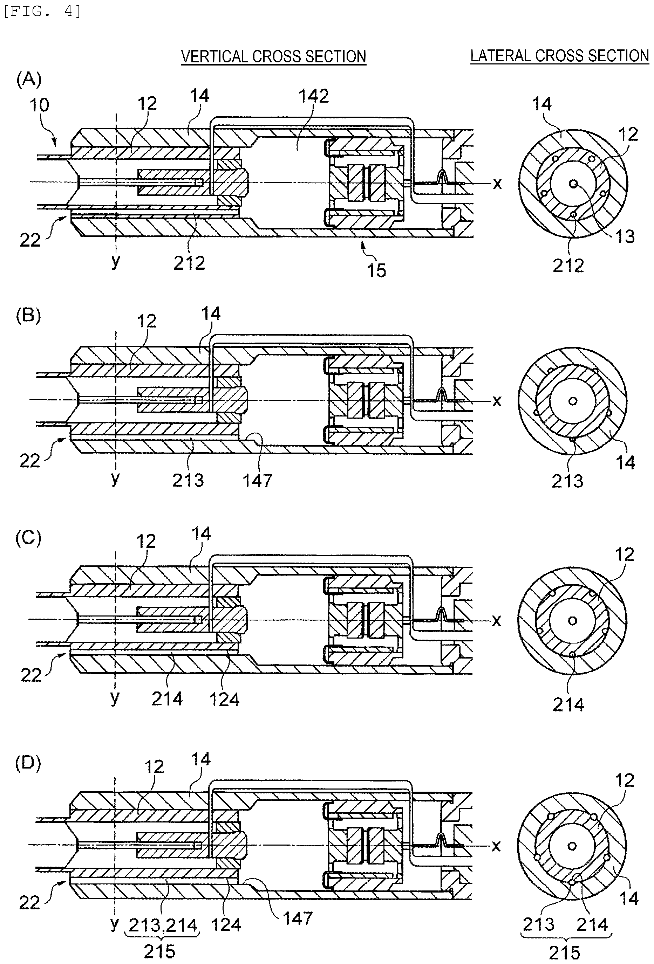

For example, an aspect of the communication path may differ from the communication path 21 in Fig. 2. More specifically, as depicted in Fig. 4(A), a communication path 212 in a through-hole shape that extends along the axial direction of the outer cylinder 12 and has a circular shape in a lateral cross section may be formed in the outer cylinder 12. As depicted in Fig. 4(B), a groove-shaped communication path 213 that extends along the axial direction of the housing 14 and has a semicircular lateral cross section may be formed in the inner peripheral surface 147 of the housing 14. As depicted in Fig. 4(C), a groove-shaped communication path 214 that extends along the axial direction of the outer cylinder 12 and has the semicircular shape in the lateral cross section may be formed in the outer peripheral surface 124 of the outer cylinder 12. As depicted in Fig. 4(D), the housing 14 and the outer cylinder 12 may be positioned and joined such that the groove-shaped communication path 213, which extends along the axial direction of the housing 14, has the semicircular shape in the lateral cross section, and is formed in the inner peripheral surface 147 of the housing 14, and the groove-shaped communication path 214, which extends along the axial direction of the outer cylinder 12, has the semicircular shape in the lateral cross section, and is formed in the outer peripheral surface 124 of the outer cylinder 12 face each other, and the two grooves 213, 214 may constitute one communication path 215 (a through-hole) that has a circular shape in a lateral cross section.

The communication path 21 is formed in the groove shape. Thus, compared to a case where the communication path 21 is formed in the shape of the through-hole, a processing step can further be simplified.

Note that the through-hole and the groove can be used in combination and may be formed in either one or both of the housing 14 and the outer cylinder 12. In Fig. 4(D), the groove 213 and the groove 214 are arranged to oppose each other. However, such combination that the groove 213 and the groove 214 do not oppose each other can also be adopted.

As the communication path 212 in the shape of the through-hole, for example, in addition to the one with the circular lateral cross section as depicted in Fig. 4(A), one with a parallelepiped lateral cross section or the like can be exemplified.

As the groove-shaped communication paths 213, 214, for example, in addition to those with the semicircular lateral cross sections as depicted in Figs. 4(B) and (C), those with V-shaped or U-shaped lateral cross sections or the like can be exemplified.

Note that a region of the housing 14 or the outer cylinder 12 where the communication path 21 is formed is preferably formed to be thicker than a region thereof where the communication path 21 is not formed. In this way, the communication path 21 can easily be formed, and the communication path 21 with a relatively larger inner diameter for an outer diameter of the housing 14 or the outer cylinder 12 can be formed. In addition, when the region of the housing 14 or the outer cylinder 12 where the communication path 21 is not formed is formed to be thin, weight of the glow plug 1 can be reduced, and manufacturing cost thereof can also be reduced.

## Claims

1. A glow plug including:
a heater, a tip of which is inserted in a combustion chamber of an internal combustion engine;
a cylindrical body that supports a base end of the heater;
a housing that supports the cylindrical body in a state where a heating section of the heater is projected; and
a pressure sensor that is provided in the housing and detects a pressure in the combustion chamber, the glow plug **characterized by** comprising:
a pressure introduction chamber that is formed between the pressure sensor and the cylindrical body in the housing; and
a communication path that is formed in at least one of the housing and the cylindrical body and communicates between the combustion chamber and the pressure introduction chamber.

2. The glow plug according to claim 1 **characterized in that** the communication path is a through-hole formed in at least one of the housing and the cylindrical body.

3. The glow plug according to claim 1 or 2 **characterized in that** the communication path is a groove that is formed in at least one of an inner peripheral surface of the housing and an outer peripheral surface of the cylindrical body.

4. The glow plug according to claim 3 **characterized in that** the grooves that are formed in the inner peripheral surface of the housing and the outer peripheral surface of the cylindrical body oppose each other to form a through-hole.

5. The glow plug according to any one of claims 1 to 4 **characterized in that** a plurality of the communication paths is formed.

6. The glow plug according to any one of claims 1 to 5 **characterized in that**, on an outside of the pressure introduction chamber, cable that is connected to the heater and energizes said heater is wired to an outside of the housing.
